# EUROPEAN PATENT SPECIFICATION

(11) **EP 0 672 619 B1**
(45) Date of publication and mention of the grant of the patent: **02.06.1999**
(21) Application number: 95301655.7
(22) Date of filing: 14.03.1995
(51) Int. Cl.: C01F 7/00, C08K 3/00

(54) **Lithium aluminium complex hydroxide salt, blending agent for resin and resin composition**
Komplexes Lithium-Aluminium-Hydroxid-Salz, Mischungszusatz für Harz und Harzzusammensetzungen
Sel complexe d'hydroxyde de lithium aluminium, agent de mélange de résine et composition de résine

(30) Priority: 15.03.1994 US 213037
(43) Date of publication of application: 20.09.1995
(73) Proprietor: MIZUSAWA INDUSTRIAL CHEMICALS, LTD., Chuo-ku Tokyo (JP)
(72) Inventor: Ogawa, Masahide, c/o Mizusawa Ind. Chem, Ltd., Chou-ku, Tokyo (JP); Goto, Kunio, c/o Mizusawa Ind. Chem, Ltd., Chou-ku, Tokyo (JP); Shoji, Shoji, c/o Mizusawa Ind. Chem, Ltd., Chou-ku, Tokyo (JP); Komatsu, Yoshinobu, c/o Mizusawa Ind. Chem, Ltd., Chou-ku, Tokyo (JP); Tatebe, Akira, c/o Mizusawa Ind. Chem, Ltd., Chou-ku, Tokyo (JP); Wakaki, Seiji, c/o Mizusawa Ind Chem, Ltd., Chou-ku, Tokyo (JP)
(74) Representative: Cresswell, Thomas Anthony

(56) References cited:
- EP-A- 0 549 340
- JOURNAL OF SOLID STATE CHEMISTRY, vol. 60, 1985 SAN DIEGO, pages 283-288, I.SISSOKO ET AL. 'Anion Intercalation and Exchange in Al(OH)3 Derived Compounds'

## Description

### BACKGROUND OF THE INVENTION

### (Field of the Invention)

The present invention relates to a lithium aluminum complex hydroxide salt (hereinafter often called LAHS) and to a process for preparing the same. More specifically, the invention relates to a LAHS useful as a stabilizer having excellent heat stabilizing action for chlorine-containing polymers and olefin resins containing halogen-containing catalyst residues, as an anti-blocking agent for thermoplastic resin films and as an infrared ray-absorbing agent, as well as to a process for preparing the same.

### (Description of the Prior Art)

Chlorine-containing polymers such as a vinyl chloride polymer and the like exhibit a color or loses mechanical properties upon the heat decomposition reaction such as dehydrochlorination or the like during the step of heat molding processing and the subsequent thermal hysteresis, and must hence be blended with stabilizing agents to prevent such defects.

Moreover, olefin resins produced by using Ziegler-type catalysts contain halogen-containing catalyst residues which form hydrogen chloride during the heat molding processing causing the molding machine to be rusted or deteriorating the resins as represented by yellowing. In order to prevent these defects, it is widely accepted practice to blend stabilizers for trapping hydrogen chloride.

As a stabilizer of this kind, hydrotalcite has long been used. For example, Japanese Laid-Open Patent Publication No. 80445/1980 describes the use of hydrotalcite as a stabilizer for the halogen-containing resins. Furthermore, Japanese Patent Publication No. 36012/1983 describes blending a halogen-containing resin with a β-diketone compound and hydrotalcites represented by the following formula (A) :

Mg₁₋ₓ · Alₓ (OH)₂ · A_{x/2} · mH₂O (A)

wherein x is a number of 0 < x ≦ 0.5. A is CO₃²⁻ or SO₄²⁻, and m is a positive number,

Furthermore, Japanese Patent Publication No. 30737/1984 describes blending a polyolefin containing halogen-containing catalyst residues produced by using Ziegler-type catalysts with a complex compound represented by the general formula (B) :

MₓAl_{y} (OH)_{2x+3y-2z} (A)_{z} · aH₂O (B)

wherein M is Mg, Ca or Zn, A is CO₃ or HPO₄, x, y and z are positive numbers, and z is zero or a positive number,
in amount of at least 0.01% by weight per the polyolefin.

Hydrotalcites are complex hydroxide carbonate salts of magnesium and aluminum, and are non-toxic, thermally stable, and become transparent when incorporated in the polymers.

Ideally, the hydrotalcites have chemical compositions represented by the formula (C) :

Mg₆Al₂ (OH)₁₆ · CO₃ · mH₂O (C)

wherein M is zero or a positive number.

In practice, however, Mg and Al form solid solutions over considerably broad ranges as represented by the formulas (A) and (B), and it is difficult to produce the hydrotalcite having a strictly definite composition.

A report entitled "Crystal-Chemical Study of Layered [Al₂Li(OH)₆]⁺X⁻ · nH₂O" by C.J. Serna et al. Clays and Clay Minerals, Vol. 25, page384, 1977) discloses the synthesis of a lithium aluminum complex hydroxide salt by dropwisely adding a benzene solution of aluminum-tri(sec-butoxide)(ASB) to an excess of lithium carbonate aqueous solution to hydrolyze ASB, washing the resulting gel and treating it with the hot water at 130 °C for several days.

A report entitled "Anion Intercalation and Exchange in Al(OH)₃-Derived Compounds" by I. Sissoko et al. (Journal of Solid State Chemistry, Vol. 25, pp. 283-288, 1985) discloses forming the LAHS by dropwisely adding AlCl₃ to an aqueous solution containing LiOH and Na₂CO₃ , changing the pH from 13 in the initial period to 10.2 in the final period to form a gel-like precipitate, and ripening it with stirring (see Comparative Example 1 which appears later).

However, the LAHS synthesized by these known methods assumes the form of gel-like particles in which crystals have not been grown to a sufficient degree. Besides, the particles have irregular shapes and sizes to such an extent that the LAHS is not suited for practical use being incorporated in the resins.

### SUMMARY OF THE INVENTION

The present inventors have found the fact that when lithium carbonate and aluminum chloride are reacted together in the presence of sodium carbonate and sodium hydroxide and when a higher fatty acid or a surfactant is added to the reaction mixture, the crystals of the resulting lithium aluminum complex hydroxide salt (LASH) grow well and, besides, the particle shapes and particle sizes are uniformalized.

According to the present invention, there is provided a lithium aluminum complex hydroxide salt (LAHS) represented by the general formula (1) :

[Al₂Li(OH)₆]ₙX · mH₂O (1)

wherein X is an inorganic or organic anion, n is a value number of anion, and m is a number of not more than 3,
and having an orientation degree (OD) defined by the formula (2) :${\text{OD = I}}_{\text{(002)}} {\text{/I}}_{\text{(110)}}$
wherein I₍₀₀₂₎ is a relative intensity of a peak in the X-ray diffraction (Cu-Kα) with an index of a plane (002) appearing at a spacing (d) of 7.67 to 7.84 angstroms, and I₍₁₁₀₎ is a relative intensity of a peak in the X-ray diffraction (Cu-Kα) with an index of a plane (110) appearing at a spacing (d) 4.41 to 4.45 angstroms,
of not smaller than 10 and, particularly, not smaller than 20.

According to the present invention, the lithium aluminum complex hydroxide salt may comprise hexagonal plate-like crystalline particles having a primary particle diameter of from 0.05 to 1 µm, and may further have a bulk density of from 0.1 to 0.25 g/cm³ and a BET specific surface area of from 20 to 40 m²/g.

In the general formula (1), the anion X is any anion but may desirably be a carbonic acid ion. In relation to the preparation method that will be described below, furthermore, the lithium aluminum complex hydroxide salt contains a higher fatty acid or a surfactant as an orientation reinforcing agent in an amount of from 0.5 to 10% by weight with respect to the salt.

According to the present invention, furthermore, there is provided a process for preparing a lithium aluminum complex hydroxide salt, which comprises reacting lithium carbonate with aluminum chloride in the water in the presence of sodium carbonate and sodium hydroxide, adding a higher fatty acid or a surfactant as an orientation reinforcing agent to obtained reaction mixture and treating the mixture at a temperature of from 60 to 100 °C, so that the orientation degree (OD) thereof becomes not smaller than 10.

According to the present invention, there is further provided a resin composition comprising a thermoplastic resin and a lithium aluminum complex hydroxide salt which has a composition represented by the above-mentioned general formula (1) in an amount of from 0.1 to 10 parts by weight per 100 parts by weight of the thermoplastic resin and further having an orientation degree (OD) as defined by the above-mentioned formula (2) of not smaller than 10.

### BRIEF DESCRIPTION OF THE DRAWINGS

Fig. 1 is an X-ray diffraction pattern using Cu-Kα rays of LAHS (sample No. 1) obtained in Example 1 of the present invention;
Fig. 2 is an X-ray diffraction pattern using Cu-Kα rays of LAHS (sample No. H-1) obtained in Comparative Example 1;
Fig. 3 is an X-ray diffraction pattern using Cu-Kα rays of LAHS (sample No. H-2) obtained in Comparative Example 2;
Fig. 4 is an X-ray diffraction pattern using Cu-Kα rays of LAHS (sample No. H-3) obtained in Comparative Example 3;
Fig 5 is an X-ray diffraction pattern using Cu-Kα rays of LAHS (sample No. H-4) obtained in Comparative Example 4;
Fig. 6 is an X-ray diffraction pattern using Cu-Kα rays of LAHS (sample No. H-5) obtained in Comparative Example 5;
Fig. 7 is a diagram explaining the calculation of an orientation degree from an X-ray diffraction image;
Fig. 8 is a diagram of a curve representing differential thermal analysis of LAHS of Example 1;
Fig. 9 is a scanning-type electron microphotograph showing particle structure of LAHS of Example 1 at a magnification of 10,000 times;
Fig. 10 is a scanning-type electron microphotograph showing particle structure of LAHS of Example 1 at a magnification of 30.000 times;
Fig. 11 is a scanning-type electron microphotograph showing particle structure of LAHS of Comparative Example 1 at a magnification of 10.000 times;
Fig. 12 is a scanning-type electron microphotograph showing particle structure of LAHS of Comparative Example 1 at a magnification of 30,000 times;
Fig 13 is a scanning-type electron microphotograph showing particle structure of LAHS of Comparative Example 2 at a magnification of 10,000 times;
Fig. 14 is a scanning-type electron microphotograph showing particle structure of LAHS of Comparative Example 2 at a magnification of 30.000 times;
Fig. 15 is a scanning-type electron microphotograph showing particle structure of LAHS of Comparative Example 3 at a magnification of 10.000 times;
Fig. 16 is a scanning-type electron microphotograph showing particle structure of LAHS of Comparative Example 3 at a magnification of 30,000 times;
Fig. 17 is a scanning-type electron microphotograph showing particle structure of LAHS of Comparative Example 4 at a magnification of 10,000 times;
Fig. 18 is a scanning-type electron microphotograph showing particle structure of LAHS of Comparative Example 4 at a magnification of 30,000 times;
Fig. 19 is a scanning-type electron microphotograph showing particle structure of LAHS of Comparative Example 5 at a magnification of 10,000 times;
Fig. 20 is a scanning-type electron microphotograph showing particle structure of LAHS of Comparative Example 5 at a magnification of 30,000 times;
Fig. 21 is an X-ray diffraction pattern using Cu-Kα rays of a hydrotalcite;
Fig. 22 is a diagram of a curve representing differential thermal analysis of the hydrotalcite;
Fig. 23 is a diagram of infrared ray absorption spectra of LAHS (sample No. 1) obtained in Example 1; and
Fig. 24 is a diagram of infrared ray absorption spectra of the hydrotalcite.

### DETAILED DESCRIPTION OF THE INVENTION

It has been considered that a lithium aluminum complex hydroxide salt (LAHS) is the one in which lithium ions are entering into vacant sites of an aluminum hydroxide octahedral layer of the gibbsite structure, and anions are incorporated to compensate for the electric charge. That is, lithium ion has the smallest ion radius among the cations and establishes the above-mentioned structure by entering into the vacant site since it is a six-coordinate ion which is an exception among the monovalent ions. LAHS is often called hydrotalcite-like compound or lithium hydrotalcite since it has a layer structure and exhibits ion-exchanging property to the anions. In fact, however, they are quite different from each other in chemical composition and structure since the hydrotalcite is obtained by isomorphous-substituting part of magnesium of the brucite structure with aluminum.

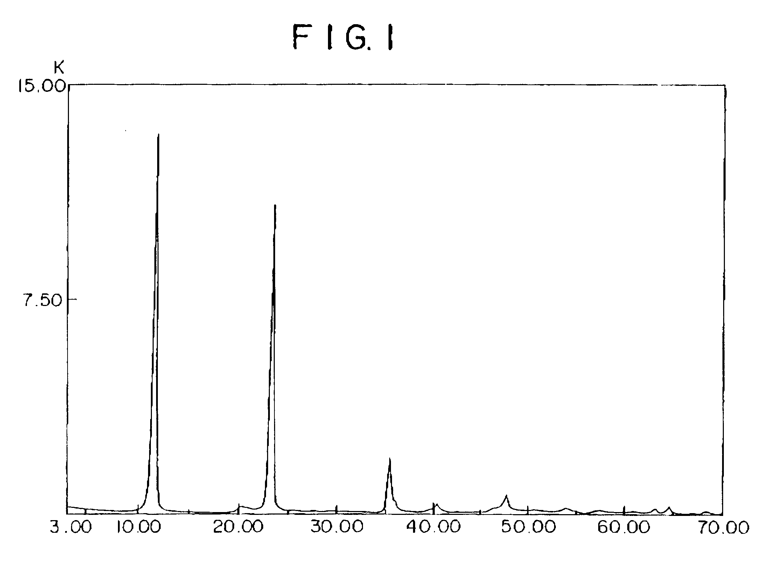

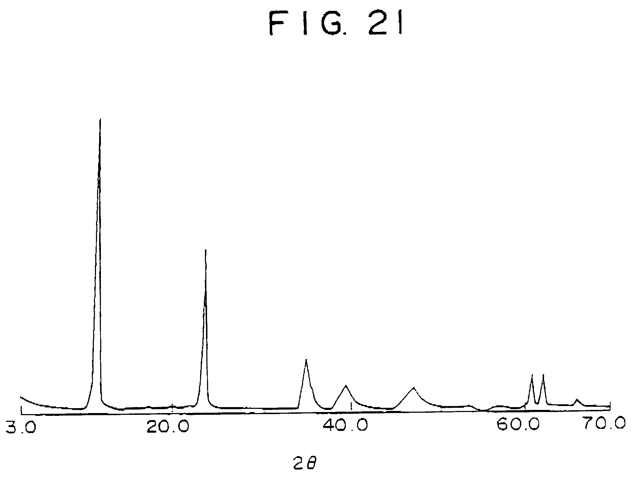

In the accompanying drawings, Fig. 1 illustrates X-ray diffraction pattern of the lithium aluminum complex hydroxide salt (LAHS) of the present invention, and Fig. 21 illustrates X-ray diffraction pattern of a hydrotalcite. In LAHS, a diffraction peak with an index of a plane [110] appears at a spacing (d) of 4.3 to 4.5 angstroms. In the hydrotalcite, however, this diffraction peak does not appear. In LAHS, furthermore, diffraction peaks appear at multiples of 2 such as indexes of planes [002], [004], [006], [008], etc. In the hydrotalcite, on the other hand, diffraction peaks appear at multiples of 3 such as indexes of planes [003], [006], [009], etc. Thus, they are altogether different in the crystalline structure, too.

In spite of containing lithium ions, a 5% aqueous suspension of LAHS shows a pH of 8 in contrast with a pH of 9 to 9.5 shown by the hydrotalcite under the same conditions. Therefore, the pH 8 of LAHS is rather low and damages the resins less. The reason is attributed to that the hydrotalcite is composed of a brucite skeleton, whereas LAHS is composed of a gibbsite skeleton.

As will be described later, LAHS gives longer thermally stabilized time than the hydrotalcite when it is incorporated in a chlorine-containing polymer. This fact suggests that LAHS has a high hydrogen chloride-trapping activity.

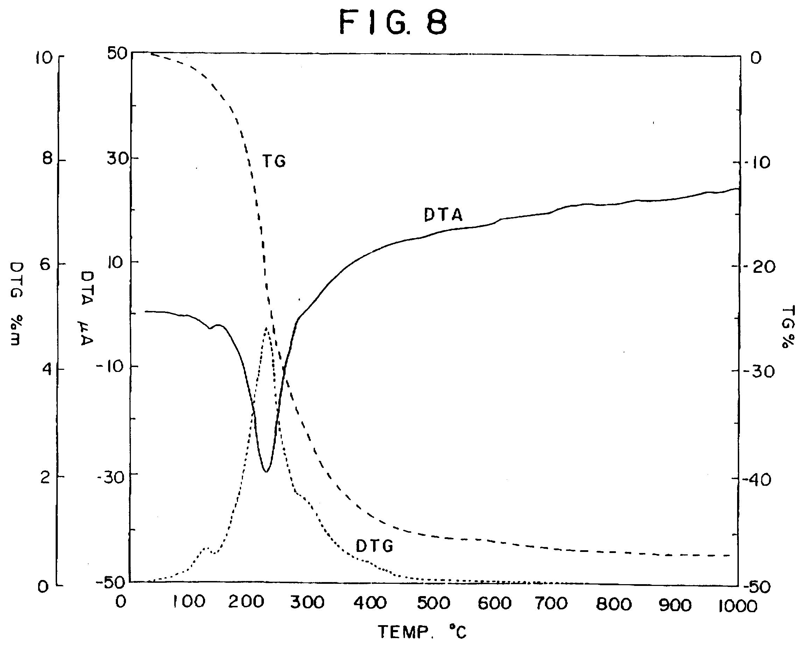

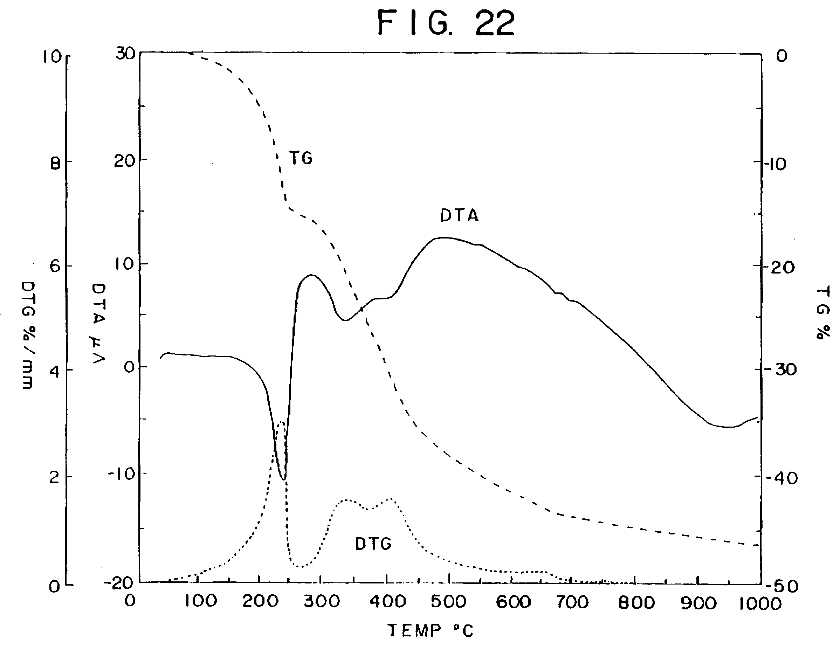

Fig. 8 is a curve of differential thermal analysis (DTA) of LAHS of the present invention, and Fig. 22 is a DTA curve of the hydrotalcite. The hydrotalcite exhibits an endothermic peak based on the desorption of the interlayer water at 180 to 270 °C, an endothermic peak based on the desorption of the water of crystallization at 280 to 370 °C , and an endothermic peak based on the desorption of a carbonic acid radical (anion) at 380 to 480 °C. On the other hand, LAHS exhibits endothermic peaks based on the desorption of the interlayer water and the water of crystallization at 160 to 270 °C, but a peak considered to be due to the desorption of a carbonic acid radical (anion) is appearing at low temperatures, i.e., 280 to 350 °C .

This indicates the fact that in LAHS of the present invention, desorption of the carbonic acid radical is effected with smaller energy and that LAHS is easily activated. It is further considered that LAHS of the present invention exhibits excellent thermally stabilizing action since it contains hydroxyl groups of the gibbsite structure at a high concentration in addition to exhibiting the above-mentioned function. These advantages are accomplished not only when the chlorine-containing polymers are blended with LAHS but also when the olefin resins containing catalyst residues are blended with LAHS.

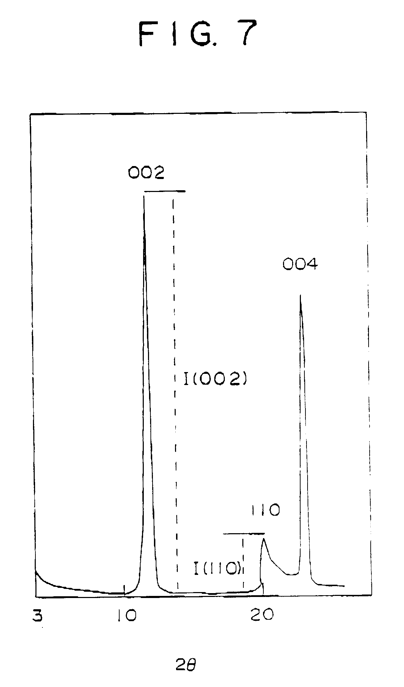

LAHS according to the present invention has a feature in that the orientation degree (OD) as defined by the above-mentioned formula (2) is not smaller than 10 and is, particularly, as high as from 20 to 50 and that the crystal orientation to the plane (002) is remarkable. In Fig. 7 explaining the method of measuring the orientation degree OD, the relative diffraction intensity I(002) of the plane (002) and the relative diffraction intensity I(110) of the plane (110) in the X-ray diffraction pattern are found, and the ratio of the two is regarded to be the orientation degree OD. This orientation degree represents the degree of orientation on the plane (002), i.e., on the plate-like surface of the hexagonal plate-like crystals.

In the above-mentioned report by Serna et al., the AHS crystals they obtained exhibit a peak intensity of the index of a plane (002) of 100 and a peak intensity of the index of a plane (110) (plane (101) in this report, which, however, is obviously an error for a plane (110)) of 15. The orientation degree is 6.67. According to X-ray diffraction pattern by Sissoko et al., the orientation degree OD is about 4.7.

According to the present invention, however, lithium carbonate is used as a starting material of lithium and aluminum chloride is used as a starting material of aluminum, and are reacted together in the presence of sodium carbonate and sodium hydroxide, and the reaction product is treated with a higher fatty acid or a surfactant to markedly increase the orientation degree.

According to the present invention, furthermore, LAHS having an orientation degree of not smaller than 10 can be favorably dispersed in the resins, and works to improve transparency of the resin composition to which it is added, and exhibits strikingly increased property for trapping chlorine (halide ions). These facts will become obvious from Table 1 appearing later.

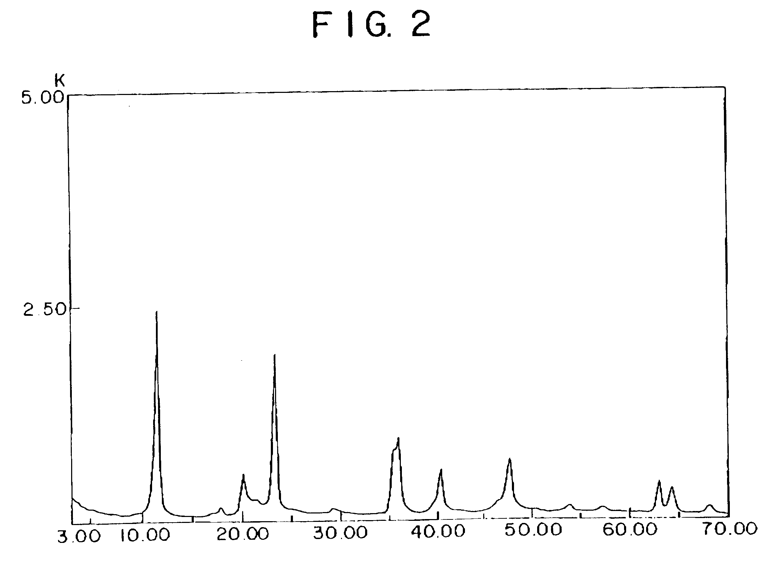

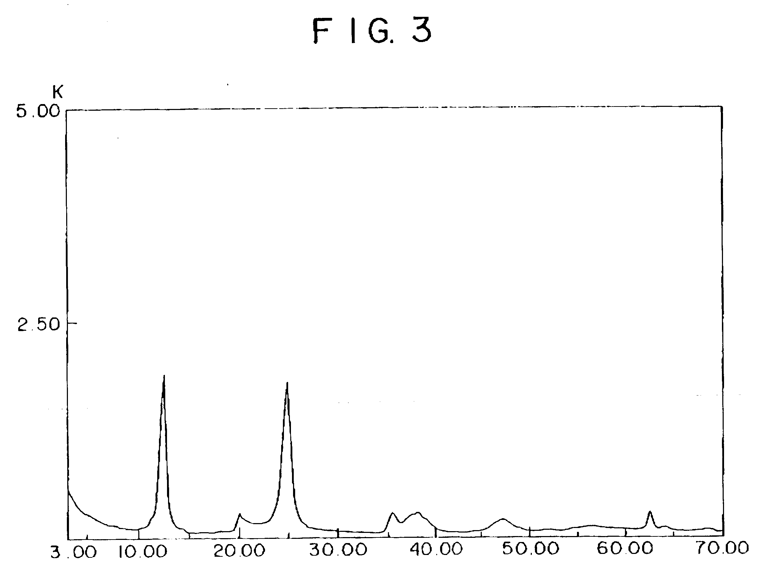

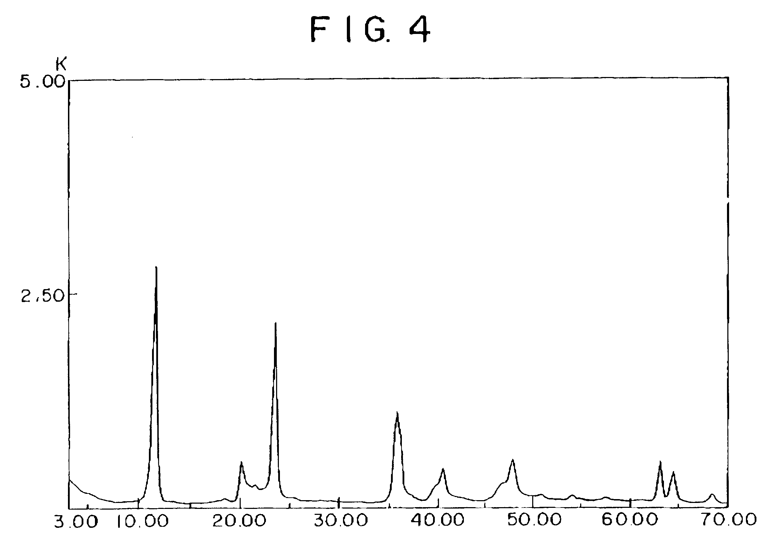

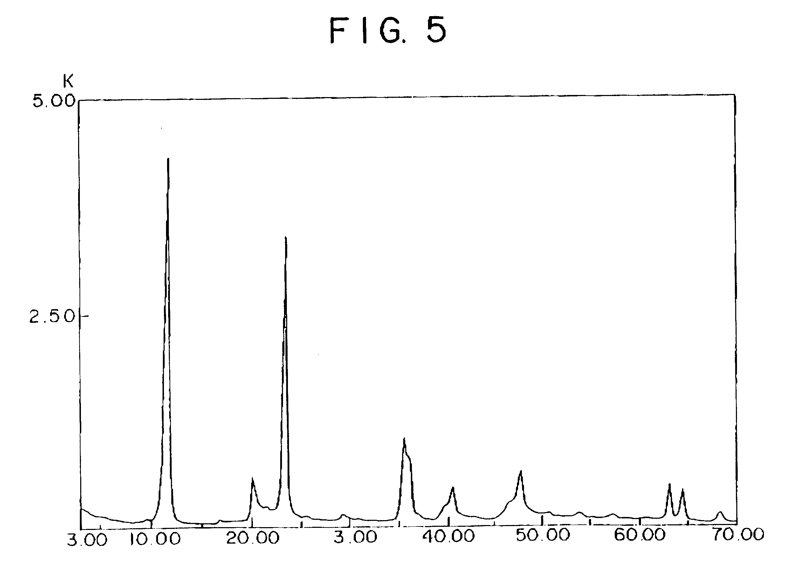

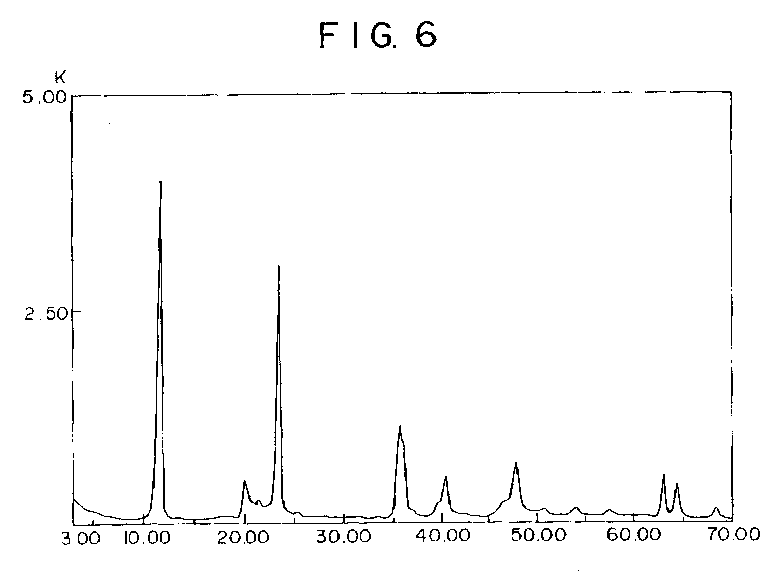

Reference should be made to Comparative Examples, Table 1, and Figs. 1 to 6 appearing later.

In Comparative Example 1 which is a trace experiment of Sissoko et al and in Comparative Example 2 which is an improvement of the experiment thereof, there is formed LAHS having an orientation degree of 6.4 or less despite of using lithium hydroxide and aluminum chloride. That is, the LAHS poorly disperses in the resins and its property for trapping chlorine is not satisfactory.

On the other hand, in Comparative Example 3 in which lithium chloride and aluminum chloride are reacted together in the presence of alkali carbonate and aluminum hydroxide, the orientation degree is still low. In Comparative Example 4 in which the reaction product is treated with a higher fatty acid in the final stage of the reaction, the orientation degree is increased to 7.3, and the dispersion property and property for trapping chlorine are improved to some extent.

According to the present invention in which lithium carbonate is reacted with aluminum chloride followed by treatment with a higher fatty acid in the final stage of the reaction, on the other hand, the orientation degree is increased to 47, and the dispersion property, transparency and property for trapping chlorine are all improved remarkably as shown in Example 1 (sample No. 1). The effect of the treatment with fatty acid will become readily obvious by the comparison of Example 1 with Comparative Example 5 in which treatment is not carried out with fatty acid.

In addition to the above-mentioned advantages, the LAHS particles of the present invention have a feature in that they are hexagonal plate-like crystals, have a predetermined particle shape and a uniform particle size. When observed by using an electron microscope, the crystals have a primary particle diameter of the order of from 0.05 to 0.6 µm and, particularly, from 0.1 to 0.4 µm. When measured by a Coulter counter method, on the other hand, the crystals have a secondary particle size of the order of from 0.5 to 6 µm and, particularly, from 1 to 5 µm

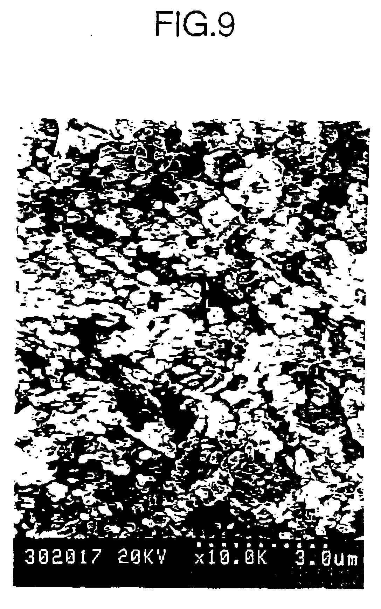

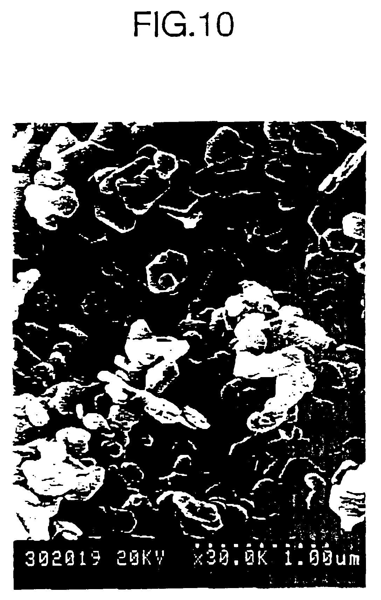

Referring to Figs. 9 and 10, it is seen that in LAHS of the present invention, the hexagonal plate-like primary particles are agglomerating in a manner that the plate-like surfaces are in parallel with each other so as to form secondary particles. When blended in the resin, however, LAHS is very finely dispersed (being pulverized in the form of primary particles) exhibiting quite excellent dispersibility.

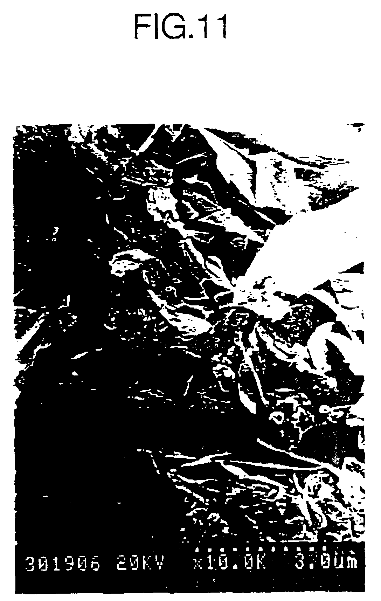

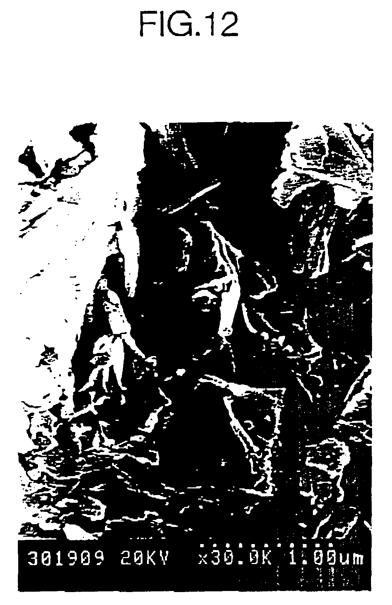

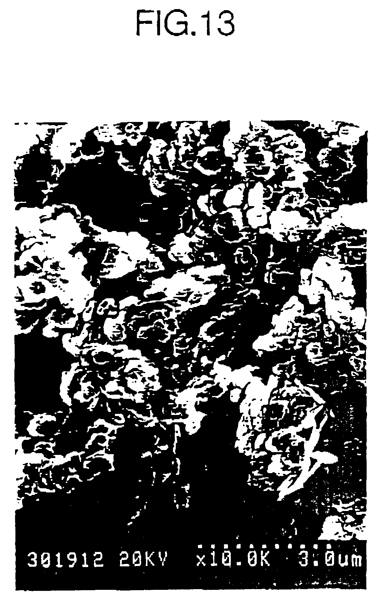

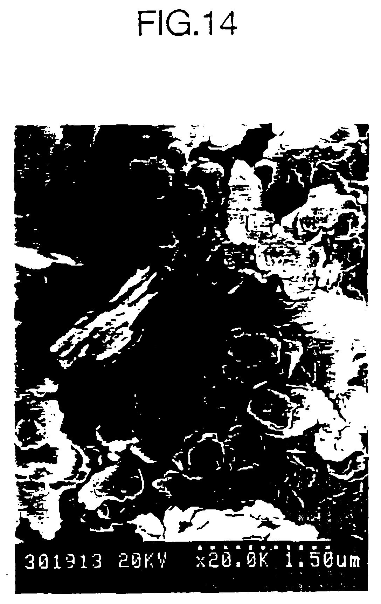

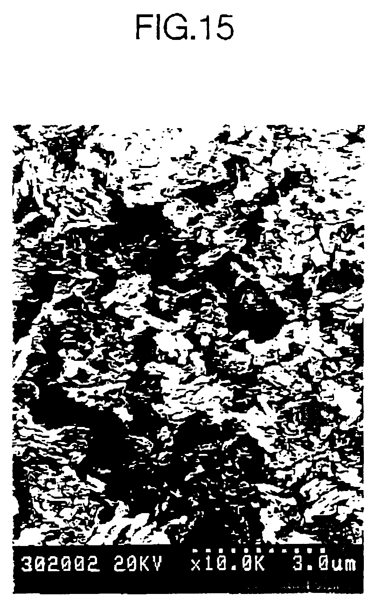

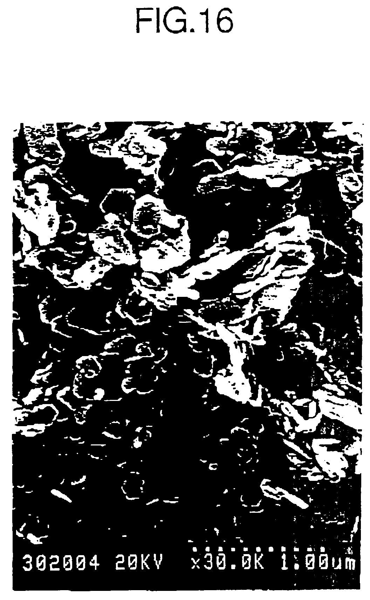

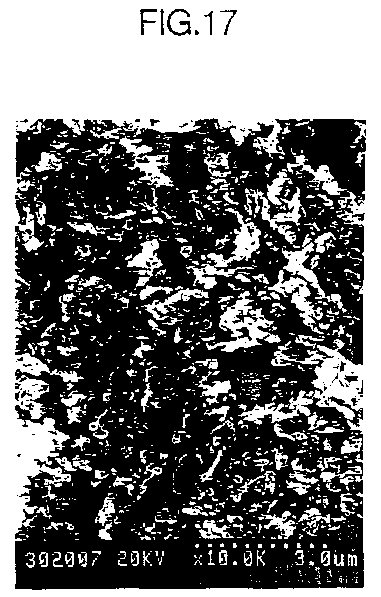

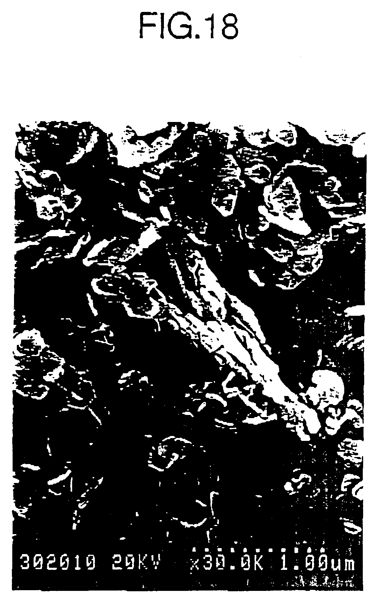

Referring to Figs. 11 and 12 (Comparative Example 1), Figs. 13 and 14 (Comparative Example 12), Figs. 15 and 16 (Comparative Example 3), and Figs. 17 and 18 (Comparative Example 4), on the other hand, growth of the crystals is insufficient and the particle sizes are irregular.

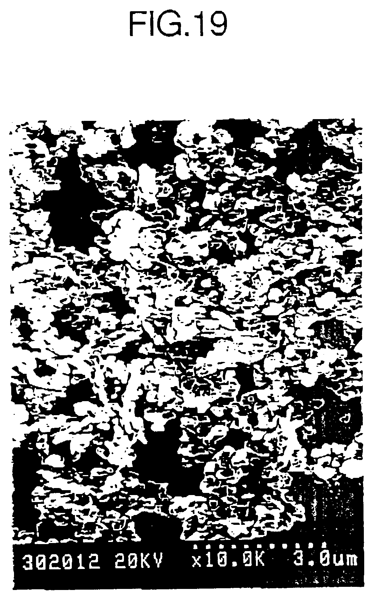

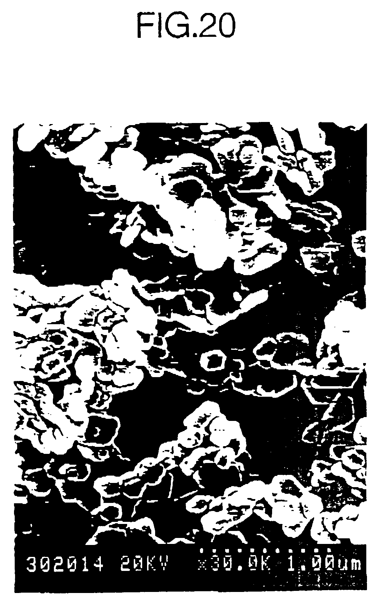

When Comparative Example 5 (Figs. 19 and 20) in which treatment with a fatty acid is not performed is compared with Figs. 11 and 12, there exists a large difference in the dispersibility between the two though primary particles of LAHS of the present invention are agglomerated to a large degree, which is an astonishing fact.

With the orientation degree being increased to be not smaller than 10, LAHS of the present invention can be used as a blending agent for the polyolefin resins to impart excellent resistance against yellowing, heat resistance and anti-aging property to resin films compared with Comparative Examples having low orientation degrees (samples Nos. H-2, H-3, H-5) and hydrotalcite, like when it is used as a blending agent for the polyvinyl chloride resins exhibiting a variety of distinguished features. This will become obvious from Table 2 appearing later. Though not yet obvious, the reason is attributed to that LAHS of the present invention disperses well in the resins compared with LAHS having low orientation degrees of Comparative Examples.

LAHS of the present invention has a bulk density which is relatively as small as from 0.1 to 0.25. This is presumably due to that the secondary particles are acquiring a relatively bulky structure. Furthermore, the BET specific surface area is in the range of from 20 to 40 m²/g.

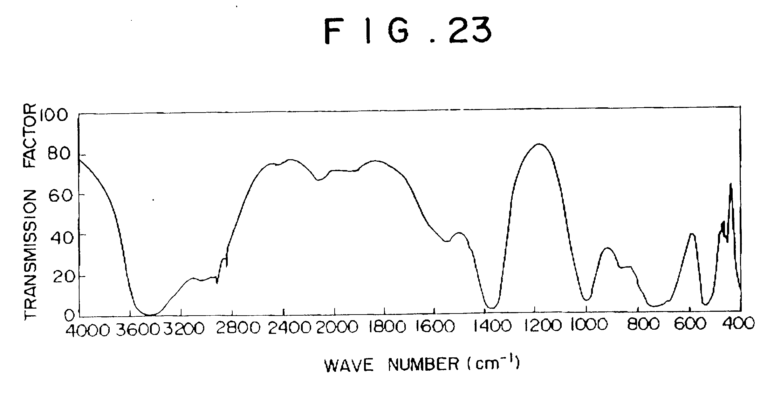

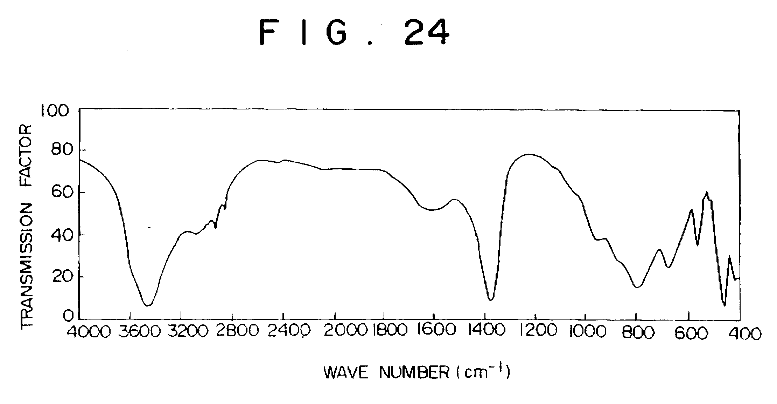

With the orientation degree being increased to be 10 or larger, furthermore, LAHS of the present invention exhibits greatly increased infrared ray absorbancy and characteristic absorption spectra compared with those of Comparative Examples and hydrotalcite having low orientation degrees. Figs. 23 and 24 are diagrams illustrating infrared ray absorption spectra of LAHS of the present invention and of the hydrotalcite. According to Fig. 23, LAHS of the present invention exhibits large infrared ray absorption spectra at wave numbers of 547, 735, 1004, 1375 and 3443 cm⁻¹. According to Fig. 24, on the other hand, the hydrotalcite exhibits infrared ray absorption spectra at wave numbers of 452, 554, 671, 785, 1370 and 3459 cm⁻¹, but the absorption waveforms are very smaller than those of LAHS of the present invention.

From these characteristics, it is expected that LAHS of the present invention can be used as an excellent infrared ray absorbing agent for the resins.

### (Lithium aluminum complex hydroxide salt)

LAHS of the present invention exhibits stoichiometrically nearly constant composition as represented by the general formula (1) mentioned earlier.

Examples of the inorganic or organic anion include carbonic acid, sulfuric acid, oxy acid of chlorine (e.g.,perchloric acid), and oxy acid of phosphorus (phosphoric acid, phosphorous acid,metaphosphoric acid) which may be used in a single kind or in a combination of two or more kinds, and may further include acetic acid, propionic acid, adipic acid, benzoic acid, phthalic acid, terephthalic acid, maleic acid, fumaric acid, succinic acid, p-oxybenzoic acid, salicylic acid, picric acid, and the like. Among them, it is desired to use carbonic acid anion.

According to LAHS of the present invention, the feature resides in that the orientation degree (OD) as defined by the aforementioned formula (2) is not smaller than 10 and is, particularly, as large as from 20 to 50, and crystals are markedly oriented to the plane (002). This high degree of orientation is brought about by the treatment with a higher fatty acid or with a surfactant. The higher fatty acid or the surfactant which serves as an orientation reinforcing agent is, usually, contained in the form of a salt in an amount of generally from 0.5 to 10% by weight and, particularly, from 1 to 5% by weight with respect to LAHS.

### (Preparation of lithium aluminum complex hydroxide salt)

According to the present invention, lithium carbonate and aluminum chloride are reacted with each other in an aqueous medium in the presence of sodium carbonate and sodium hydroxide. Aluminum and lithium components should be contained in such amounts that the atomic ratio of Al/Li is about 2. Furthermore, the molar ratio of CO₃/Li should not be smaller than 0.5.

During the reaction, the alkali agent is so added that the pH after all components are added is from 9.5 to 12 and, particularly, from 10 to 11.5, and the reaction temperature is from normal temperature through up to 130 °C . When the reaction temperature is low, the degree of crystallization is low. In general, therefore, the reaction may carried out at a temperature of not lower than 60 °C and, particularly, not lower than 80 °C . Moreover, the lithium aluminum complex hydroxide salt can be prepared by the hydrothermal synthesis using an autoclave or the like. When the reaction is carried out at high temperatures, the crystallization proceeds to a high degree resulting in a decrease in the oil-absorbing amount and specific surface area but in an increase in the apparent specific gravity. The reaction time of from about 5 to about 20 hours is, usually, sufficient, and the reaction can be carried out in two stages, i.e., at a temperature of not higher than 40 °C and then at a temperature of not lower than 80 °C.

The lithium aluminum complex hydroxide salts other than those of the carbonate type can be prepared by subjecting the formed carbonate to the ion-exchange with the above-mentioned inorganic acid or organic acid, such as sulfuric acid, oxy acid of chlorine (e.g. , perchloric acid), oxy acid of phosphorus (phosphoric acid, phosphorous acid, metaphosphoric acid), acetic acid, propionic acid, adipic acid, benzoic acid, phthalic acid, terephthalic acid, maleic acid, fumaric acid, succinic acid, p-oxybenzoic acid, salicylic acid, picric acid, or the like acid.

Crystals that are formed contain water in amounts of from about 0.5 to about 3 moles, which, however, can be partly or completely dehydrated upon heating at a temperature of not higher than 300 °C and drying.

According to the present invention, a higher fatty acid or a surfactant is added to the reaction mixture that contains LAHS in order to treat LAHS with stirring.

As the higher fatty acid, there can be used a saturated or unsaturated fatty acid having 10 to 22 carbon atoms and, particularly, having 14 to 18 carbon atoms. In the case of the saturated fatty acids, examples include capric acid, undecanoic acid, lauric acid, myristic acid, palmitic acid, margaric acid, stearic acid and arachic acid. In the case of the unsaturated fatty acids, examples include linderic acid, tsuzuic acid, petroselinic acid, oleic acid, linoleic acid, linolenic acid and arachidonic acid. Among them, stearic acid is preferably used. The fatty acid may be a mixed fatty acid such as of beef tallow fatty acid, coconut oil fatty acid and palm oil fatty acid, as a matter of course.

The anionic surfactant may be any one of, for example, primary higher alcohol sulfuric ester, secondary higher alcohol sulfuric ester, primary higher alkyl sulfonate, secondary higher alkyl sulfonate, higher alkyl disulfonate, sulfonated higher fatty acid salt, sulfuric ester of higher fatty acid, higher fatty acid ester sulfonate, sulfuric ester of higher alcohol ether, sulfonate of higher alcohol ether, alkylolated sulfuric ester of higher fatty acid amide alkylbenzenesulfonate, alkylphenolsulfonate, alkylnaphthalenesulfonate, or alkylbenzimidazolesulfonate. Concrete compound names of these surfactants have been disclosed in, for example, "Synthetic Surfactants" by Hiroshi Horiguchi, Sankyo Publishing Co., 1966.

As the nonionic surfactant, there can be used the one having a low HLB and, particularly, the one having HLB of not larger than 12 and, most desirably, not larger than 8. Generally, there can be used any one of polyoxyethylene alkyl ether, polyoxyethylene alkylphenyl ether, polyoxyethylene fatty acid ester, polyoxyethylene fatty acid amide ether, polyhydric alcohol fatty acid ester, polyoxyethylene polyhydric alcohol fatty acid ester, fatty acid sucrose ester, alkylolamide, or polyoxyalkylene block copolymer having HLB within the above-mentioned range. In these nonionic surfactants, in general, HLB decreases with a decrease in the amount of the polyoxyethylene units. By adjusting the additional mole number of ethylene oxide, therefore, the nonionic surfactant having desired HLB can be obtained.

The fatty acid or the surfactant may added in an amount of from 0.5 to 10% by weight and, particularly, from 1 to 5% by weight with respect to LAHS.

Though there is no particular limitation in the processing conditions, the treatment can, generally, be carried out at a temperature of from 60 to 100 °C for from 0.5 to 5 hours with stirring. The fatty acid that is used reacts with sodium ions present in the reaction system, migrates into the aqueous phase in the form of a sodium soap, and whereby the surface of the formed LAHS is treated. Even when an anionic surfactant is used, the same reaction takes place if there is used an organic acid which is not a salt.

The reaction product after treated is subjected to a known solid-liquid separation operation such as filtration from the mother liquor or centrifuge, and is then washed with water to a sufficient degree, dried and is, as required, pulverized to obtain a product.

The surface-treated LAHS that is obtained can be directly used as a blending agent for resins but can, as required, be subjected to the after-treatment using an organic or inorganic assistant.

Examples of the organic assistant include calcium salts of organic acid such as stearic acid, palmitic acid and lauric acid; metal soaps such as zinc salt, magnesium salt and barium salt; coating agents such as silane-type coupling agent, aluminum-type coupling agent, titanium-type coupling agent, zirconium-type coupling agent, waxes, and unmodified or modified resins (e.g., rosin, petroleum resin, etc.), which can be used as a stabilizer or a blending agent for the resins to treat the surfaces. The coating agent can be used in an amount of from 0.5 to 10% by weight and, particularly, from 1 to 5% by weight with respect to LAHS.

Examples of the inorganic assistant include fine particulate silica such as Aerosil or Aerosil subjected to hydrophobic treatment ; silicates such as calcium silicate and magnesium silicate: metal oxides such as calcia, magnesia and titania; metal hydroxides such as magnesium hydroxide and aluminum hydroxide; metal carbonates such as calcium carbonate; A-type and P-type synthetic zeolites, their acid-treated products or their metal ion-exchanged products having predetermined particle shapes, which can be used being blended in or being powdered over LAHS.

### (Resin composition)

According to the present invention, LAHS is blended in an amount of, usually, from 0.01 to 10 parts by weight per 100 parts by weight of a resin that is to be stabilized. The amount of blending is suitably selected depending upon the type of the resin within the above-mentioned range.

In a preferred embodiment of the present invention, LAHS is blended in an amount of from 0.1 to 10 parts by weight and, particularly, from 0.5 to 1.0 part by weight per 100 parts by weight of a chlorine-containing polymer.

Examples of the chlorine-containing polymer include polymers such as polyvinyl chloride, polyvinylidene chloride, chlorinated polyviynl chloride, chlorinated polyethylene, chlorinated polypropylene, chlorinated rubber, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene-acrylonitrile copolymer, vinyl chloride-butadiene copolymer, vinyl chloride-propylene chloride copolymer, vinyl chloride-vinylidene chloride-vinyl acetate terpolymer, vinyl chloride-acrylate copolymer, vinyl chloride-maleate copolymer, vinyl chloride-methacrylate copolymer, vinyl chloride-acrylonitrile copolymer, and internally plasticized polyvinyl chloride; and blends of these chlorine-containing polymers and polyolefins such as α-olefin polymers like polyethylene, polypropylene, polybutene, and poly-3-methylbutene, their copolymers such as ethylene-vinyl acetate copolymer or ethylenepropylene copolymer, copolymers with polystyrene, acrylic resin, styrene and other monomers (e.g., maleic anhydride, butadiene, acrylonitrile, etc.), acrylonitrile-butadiene-styrene copolymer, acrylate-butadiene-styrene copolymer, or methacrylate-butadiene-styrene copolymer.

In this case, it is desired to use a zinc salt of fatty acid in an amount of from 0.01 to 10 parts by weight and a β-diketone or a β-keto acid ester in an amount of from 0.01 to 10 parts by weight per 100 parts by weight of the chlorine-containing polymer.

Examples of the zinc salt of fatty acid will be those mentioned above, and examples of the β-diketone or the β-keto acid ester will be those that have been known in this field of application, such as 1,3-cyclohexadione, methylene-bis-1,3-cyclohexadione, 2-benzyl-1,3-cyclohexadione, acetyltetralone, palmitoyltetralone, stearoyltetralone, benzoyltetralone, 2-acetylcyclohexanone, 2-benzoyl cyclohexanone, 2-acetyl-1,3-cyclohexanedione, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, bis(methylene-3,4-dioxybenzoyl)methane, benzoylacetylphenylmethane, stearoyl(4-methoxybenozyl)methane, butanoylacetone, distearoylmethane, acetylacetone, stearoylacetone, bis(cyclohexanoyl)methane and dipivaloylmethane.

As a matter of course, the chlorine-containing polymer stabilizer of the present invention may be used in combination with various known additives such as stabilizers or stabilizing assistants like non-metallic stabilizers, organotin stabilizers, and basic inorganic acid salts, plasticizers, antioxidants, light stabilizers, fillers and epoxy stabilizers.

In molding crystalline resins such as polypropylene and polyethylene terephthalate that will be described later, in particular, addition of a variety of nucleus-forming agents helps improve transparency and shock resistance, shorten the molding cycle, and improve dimensional stability.

Examples of the plasticizer include ester-type plasticizers such as phthalic ester plasticizer, adipic ester plasticizer, as well as polyester-type plasticizer, phosphoric ester-type plasticizer, chlorine-type plasticizer, etc.

Examples of the phenol-type antioxidant includes 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, 1,6-hexamethylene bis[(3,5-di-tert-butyl-4-hydroxyphenyl)propionate], 1,6-hexamethylene bis[(3,5-di-tert-butyl-4-hydroxyphenyl)propionic acid amide], bis[3,3-bis(4-hydroxy-3-tert-butyl phenyl)butyric acid]glycol ester, 1,1,3-tris(2-methyl-4-hydroxy-5-tert-butyl phenyl)butane, 1,3,5-tris(2,6-dimethyl-3-hydroxy-4-tert-butyl benzyl)isocyanulate, 1,3,5-tris(3,5-di tert-butyl-4-hydroxy benzyl)isocyanulate, triethylene glycol bis[(3-tert-butyl-4-hydroxy-5-methyl phenyl)propionate], etc.

Examples of the sulfur-type antioxidant include dialkylthiodipropionates such as dilauryl thiodipropionate, dimyristyl and distearyl, as well as β-alkylmercaptopropionic esters of polyol such as pentaerythritol tetra(β-dodecylmercaptopropionate) and the like.

Examples of the phosphite-type antioxidant include tris(2,4-di-tert-butyl phenyl)phosphite, tris(2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, distearyl pentaerythritol diphosphite, di(nonylphenyl)pentaerythritol diphosphite, etc.

Examples of the ultraviolet ray-absorbing agent include 2-hydroxybenzophenones such as 2,4-dihydroxybenzophenone, 2-hydroxy-4-methoxybenzophenone, 5,5'-methylene bis(2-hydroxy-4-methoxybenzophone), etc.; and 2-(2'-hydroxyphenyl)benzotriazoles such as 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylene bis(4-tert-octyl-6-benzotriazolyl)phenol, etc.

As the light stabilizer, there can be used hindered amine-type light stabilizers such as 1,2,2,6,6-pentamethyl-4-piperidyl stearate, 2,2,6,6-tetramethyl-4-piperidyl benzoate, N-(2,2,6,6-tetramethyl-4-piperidyl)dodecyl succinic acid imide. 1-[(3,5-di-tert-butyl-4-hydroxyphenyl)propionyloxyethyl]-2,2,6,6-tetramethyl-4-piperidyl(3,5-di-tert-butyl-4-hydroxyphenyl)propionate, bis-(2,2,6,6-tetramethyl-4-piperidyl)sebacate, tetra(2,2,6,6-tetramethyl-4-piperidyl)butanetetracarboxylate, tetra(1,2,2,6,6-pentamethyl-4-piperidyl)butanetetracarboxylate, bis(2,2,6,6-tetramethyl-4-piperidyl)-di(tridecyl)butanetetracarboxylate, bis(1,2,2,6,6-pentamethyl-4-piperidyl)-di(tridecyl)butanetetracarboxylate, and the like.

Examples of the nucleus-forming agent include aluminum-p-tert-butyl benzoate, dibenzylidene sorbitol, sodium bis(4-tert-butylphenyl)phosphate, sodium 2,2'-methylene bis(4,6-di-tert-butylphenyl)phosphate, calcium 2,2'-methylene bis(4,6-di-tert-butylpbenyl)phosphate, and aluminum 2,2'-methylene bis(4,6-di-tert-butylphenyl)phosphate.

Examples of the epoxy compound include epoxylated soybean oil, epoxylated linseed oil, epoxylated fish oil, epoxylated tall oil fatty acid ester, epoxylated beef tallow oil, epoxylated castor oil, epoxylated safflower oil, epoxylated linseed oil fatty acid butyl, tris(epoxypropyl)isocyanulate, 3-(2-xenoxy)-1,2-epoxypropane, bisphenol-A glycidyl ether, vinylcyclohexenediepoxide, dicyclopentadienediepoxide, 3,4-epoxycyclohexyl-6-methylepoxycyclohexane carboxylate, and the like.

In other typical applications of the invention, the blending agent is blended in the olefin resins so that the olefin resins will not be deteriorated by the halogen catalyst residues. According to the present invention, the blending agent is used in an amount of from 0.01 to 10 parts by weight per 100 parts by weight of the olefin resin. Examples of the olefin resin include polypropylene, low-, medium- or high-density polyethylene or linear low-density polyethylene, crystalline propylene-ethylene copolymer, ionically crosslinked olefin copolymer, ethylene-vinyl acetate copolymer, ethylene-acrylic ester copolymer, and the like.

According to the present invention, the blending agent is used being blended in thermoplastic polyesters such as polyethylene terephthalate, polybutylene terephthalate, etc., polyamides such as 6-nylon, 6,6-nylon, 6,8-nylon, etc., polycarbonates, polysulfones, polyacetals and other thermoplastic resins, in order to improve their stability and, particularly, their thermal stability.

LAHS which is the blending agent of the present invention exhibits excellent infrared ray-absorption spectrum as described above. When added to films for greenhouses such as agricultural vinyl chloride, agricultural vinyl acetate, agricultural polyethylene, etc., LAHS of the present invention exhibits excellent dispersibility, transparency and makes it possible to obtain excellent temperature-retaining property since it has infrared ray absorption region that is not obtained with the hydrotalcite. Accordingly, LAHS of the present invention can be used as an excellent blending agent for resins.

LAHS which is the blending agent of the present invention is assuming a fine particulate form of a distinct hexagonal plate-like shape and can be used as an anti-blocking agent (AB agent) for resin films which are as very thin as from 15 to 25 µm.

### EXAMPLES

The invention will now be described by way of the following Examples to which only, however, the invention is in no way limited.

### (Example 1)

Fine particles of the lithium aluminum complex hydroxide salt (LAHS) having a high orientation degree (OD) of the present invention are prepared as described below.

### Preparation of LAHS and its properties

24.08 Grams of sodium hydroxide (NaOH content of 96%), 2.13 g of sodium carbonate (Na₂CO₃ content of 99.7%) and 3.73 g of lithium carbonate (Li₂CO₃ content of 99%) were added to 2.3 liters of distilled water with stirring, and the mixture was heated at 40 °C . To this aqueous solution was then gradually added another aqueous solution that was prepared by adding 49.78 g of aluminum chloride (20.48% as Al₂O₃) to 250 ml of distilled water so that the CO₃/Li mole ratio was 0.7 and the Al/Li mole ratio was 2.0. The pH after the addition has been finished was 10.1. The reaction was further carried out with stirring at a temperature of 90 °C for 20 hours. After the reaction has been finished, 1.1 g of stearic acid was added to perform the surface-treatment reaction (orientation reinforcing treatment) with stirring. The resulting reaction suspension was filtered, washed with water, dried at 70 °C , and pulverized in a small sample mill to obtain a lithium aluminum complex hydroxide salt (sample No. 1) which was then measured for its properties that are described below. The results were as shown in Table 1.

### Measuring method

### (1) X-ray diffraction

By using a RAD-IB system manufactured by Rigaku Denki Co., measurement was taken with Cu-Kα.

| | |
|---|---|
| Target | Cu |
| Filter | curved crystal graphite monochrometer |
| Detector | SC |
| Voltage | 40 KVP |
| Current | 20 mA |
| Count full scale | 700 c/s |
| Smoothing point | 25 |
| Scanning speed | 1° /min. |
| Step sampling | 0.02° |
| Slit | DS1° RS 0.15 mm SS1° |
| Glancing angle | 6° |

### (2) Orientation degree (OD)

Orientation degree (OD) is defined by the following formula:${\text{OD = I}}_{\text{(002)}} {\text{/I}}_{\text{(110)}}$
wherein I₍₀₀₂₎ is a relative intensity of a peak on the plane (002) appearing near lattice constants of 7.67 to 7.84 angstroms in the Cu-Kα X-ray diffraction pattern, and I₍₁₁₀₎ is a relative intensity of a peak on the plane (110) appearing near lattice constants of 4.41 to 4.45 angstroms in the X-ray diffraction pattern.

### (3) Average particle diameter

The average particle diameter (median diameter: µm) was measured by using a particle size analyzer of laser diffraction system (Coulter R LS-130) manufactured by Coulter Counter Co.

### (4) Apparent specific gravity

Measured in accordance with JIS K-6220

### (5) Specific surface area

Measured in compliance with the BET method using Sorptpmatic Series 1800 manufactured by Carlo Erba Co.

### (6) Thermal analysis

Measured by using an SSC-5200 TG-DTA system manufactured by Seiko Denshi Kogyo Co. Measuring conditions consisted of using α-Al₂O₃ as a standard substance, raising the temperature at a rate of 10 °C /min. in an atmosphere of the air.

### (7) Constants X and m

The Al/Li mole ratio was measured in accordance with the method of chemical analysis of lime. JIS R9011, and m was calculated from the starting material created at 250 °C for 3 hours.

### Evaluation by using a PVC resin

In order to evaluate the obtained sample (LAHS) as a resin stabilizer, a vinyl chloride sheet blended with LAHS which is the sample was prepared, in order to measure dispersibility and chlorine-trapping property of the sample and the transparency of the sheet by the following methods.

### (8) Molding method (PVC sheet)

### (Blending)

| | |
|---|---|
| Vinyl chloride resin (polymerization degree: 1050) | 100 parts by weight |
| Dioctyl phthalate | 50 parts by weight |
| Zinc laurate | 0.3 parts by weight |
| Dibenzoylmethane | 0.1 part by weight |
| Dihydroxydiphenylpropane | 0.2 parts by weight |
| Sample | 1.4 parts by weight |

### (Molding method)

The above blended composition was kneaded by a roll mill at 150 °C for 5 minutes to prepare a uniform mixture having a thickness of 0.5 mm, which was then heated at 160 °C under the pressure of 150 kg/cm² for 5 minutes to prepare a soft vinyl chloride sheet having a thickness of 1 mm.

### (9) Thermal stability (chlorine-trapping property)

In accordance with JIS K-6723, the sample sheet was cut into 1 mm x 1 mm, and 2 g of the sample chips were put into a test tube having a Congo Red paper. The Test tube was heated at 180 °C to measure the HCl desorption time by the heat decomposition of the vinyl chloride.

### (10) Transparency (transmission factor)

White light transmission factor of the sample sheet was measured by using a photo-electronic filter photometer manufactured by Hirama Rika Kenkyujo Co.

### (11) Dispersion test

Dispersibility in the molded sheet was evaluated by naked eyes.

The number of particles having particle diameters of not smaller than 40 µm a per a unit area (number/mm²) in the sample sheet in a restricted visual field image was found by using a binocular polarized microscope (Optiphot-Pol XTP) manufactured by Nikon Co.

### (12) Infrared ray-absorption spectrum

Measured by using FTIR-8000 manufactured by Nippon Bunko Co.

### Evaluation by using a polyolefin resin

To confirm the effects of the resin stabilizer of the present invention for preventing the polypropylene resin containing halogen-containing catalyst residues from exhibiting yellow color and from being rusted a polypropylene sheet was prepared by the following method of blending and molding, and was evaluated.

### (13) Method of molding a polyolefin film

### (Blending)

| | |
|---|---|
| Polypropylene resin (homopolymer)*¹ containing halogen-containing catalyst residues | 100 parts by weight |
| Sample | 0.04 parts by weight |
| Antioxidant | 0.14 parts by weight |
| Nucleus-forming agent (aromatic phosphoric ester) | 0.2 parts by weight |
| Lubricant | 0.3 parts by weight |

| | |
|---|---|
| *¹ Having a melt flow rate of 13 g/10 min. at 230 °C under a load of 2.16 kgs. | |

The above blended composition was pelletized by using an extruder at 210 °C , the pellets were molded into a film having a thickness of 50 to 60 µm by the inflation film-forming method at a die temperature of 260 °C , and the following physical properties were measured.

### (14) Testing the yellowing resistance and thermal stability

The above molded sheet was placed in a constant-temperature constant-humidity bath maintained at 85 °C 90% RH and was left to stand for 24 days. The surface hue of the molded sheet was measured by using a color-difference meter. Model 1001 DP, manufactured by Nihon Denshoku Kogyo Co. to find an N-value (degree of yellowness). The smaller the N-value, the better the yellowing resistance.

### (Comparative Example 1)

In 1-liter glass beaker was introduced 600 ml of a mixture solution of 1.5M LiOH · H₂O and 0.08M Na₂CO₃, and to which was further dropwisely added 250 ml of a 0.4M AlCO₃ · 6H₂O over a period of 45 minutes with stirring at 250 rpm. The literature quoted earlier discloses that the pH has changed from 13 into 10.2 after the reaction. In this trace experiment, however, the pH was first 13 but was also 13 at the end of the reaction; i.e., the pH did not drop. After the dropwise addition has been finished, the mixture was stirred for a whole day and night at 50 rpm. As disclosed in the literature, the obtained product (sample No. H-1) was a gel which could be separated by filtration with difficulty. The product was then hydrothermally reacted at 160 °C for 59 hours, filtered through a Buchner funnel, and was sufficiently washed with distilled water until no chlorine was detected with a 3% AgNO₃ aqueous solution. The thus obtained product was dried at 70 °C for 15 hours and was then pulverized in a small sample mill.

### (Comparative Example 2)

Since the sample No. H-1 did not permit the pH to drop as mentioned above, use was then made of 600 ml of a mixture solution comprising 200 ml of 1.5M LiOH · H₂O and 400 ml of 0.08M Na₂CO₃. In this time, the pH dropped from an initial value of 13 down to a final value of 10.52.

Like the sample No. H-1, the product was a gel that could be separated by filtration with difficulty. The product obtained in the same manner as the sample No. H-1 was regarded to be a sample No. H-2.

### (Comparative Example 3)

In Comparative Example 4, LAHS after the reaction was not treated with stearic acid (sample No. H-3).

### (Comparative Example 4)

25 Grams of sodium hydroxide (NaOH content of 96%) and 7.44 g of sodium carbonate (Na₂CO₃ content of 99.7%) were added to 2 liters of distilled water which was then heated at 40 °C with stirring. To this aqueous solution was added another aqueous solution prepared by adding 4.33 g of lithium chloride (34.54% as Li₂O) and 49.78 g of aluminum chloride (20.48% as Al₂O₃) to 500 ml of distilled water, so that the CO₃/Li mole ratio was 2.0. The pH at this moment was 10.7. The solution was then reacted at 90 °C for 20 hours. After the reaction, 1.1 g of stearic acid was added thereto with stirring to carry out the surface-treatment reaction. The obtained reaction suspension was filtered, washed with water, dried at 70 °C, and was pulverized in a small sample mill to obtain a lithium aluminum complex hydroxide salt (LAHS) (sample No. H-4).

### (Comparative Example 5)

In Example 1, LAHS after the reaction was not treated with stearic acid (sample No. H-5).

### (Example 2)

Orientation reinforcing agents other than stearic acid used in Example 1 were studied.

24.08 Grams of sodium hydroxide (NaOH content of 96%) and 3.73 g of sodium carbonate (Na₂CO₃ content of 99%) were added to 2.3 liters of distilled water with stirring, and the mixture was heated at 40 °C . To this aqueous solution was then gradually added another aqueous solution that was prepared by adding 49.78 g of aluminum chloride (20.48% as Al₂O₃) to 250 ml of distilled water so that the CO₃/Li mole ratio was 0.7 and the Al/Li mole ratio was 2.0. The pH after the addition has been finished was 10.1. The reaction was further carried out with stirring at a temperature of 90 °C for 20 hours. The obtained reaction suspension was filtered, washed with water and was dispersed in distilled water to obtain an LAHS slurry having a solid content of 2.33%.

Thereafter, the orientation reinforcing agents described below were added each in an amount of 5% with respect to the LAHS solid component, in order to carry out the surface-treatment reaction with stirring at temperatures depending upon the melting points of the agents. Thereafter, the product was separated by filtration, dried at 60 °C and was pulverized in a small sample mill to obtain a lithium aluminum complex hydroxide salt of which the orientation degree has been reinforced.

### (Example 3)

To 100 parts by weight of a polypropylene resin powder (Hipole F657P produced by Mitsui Petrochemical Co.) were added 0.15 parts of a 2,6-di-tertiary butyl paracresole, 0.1 part of calcium stearate and a blending agent which is an AB agent. By using a super mixer, the mixture was mixed together for one minute, melt-kneaded by using a monoaxial extruder at a kneading temperature of 230 °C , and was pelletized.

From the pellets was prepared a green film by the T-die molding. The green film was then drawn into six times in the longitudinal direction and 12 times in the transverse direction in order to obtain a biaxially drawn film having a thickness of 15 µm.

The obtained film was tested in regard to the following items. The results were as shown in Table 4.
- Haze:: Measured by using an automatic digital hazemeter NDH-20D manufactured by Nippon Denshoku Co., in compliance with JIS K-6714.
- Blocking property:: Two pieces of films were overlapped one upon the other, left to stand for 24 hours at 40 °C under the load of 200 g/cm², and their peeling was evaluated as follows:
- ⓞ :: Peels without resistance.
- ○ :: Peels with slight difficulty.
- △ :: Peels with difficulty.
- X:: Peels with considerable difficulty.
- Fisheyes:: Represented by the number of those larger than 0.1 mm in 400 cm² of a film as observed using an optical microscope.
- Scratch:: The load of 10 kg was placed on the films measuring 10 x 10 cm. After rubbed three times, the haze of the film was measured; i.e., scratch was found from a difference in the haze of before and after the rubbing.

### (Example 4)

The following blended composition was roll-kneaded at 150 °C for 6 minutes, pressed at 170 °C for 5 minutes to obtain a sheet having a thickness of 1 mm, and was evaluated for its property for preventing the initial coloring of vinyl chloride resin and thermal stability. A test piece was prepared from the above sheet and was tested for its volume resistivity (VR) and thermal stability (HT) [using a Congo Red test paper] in compliance with JIS K-6723. The test piece was then kneaded under the same conditions and was then pressed at 190 °C for 15 minutes to obtain a sheet having a thickness of 1 mm to measure the color of the sheet (degree of whiteness, color difference, degree of yellowness). The results were as shown in Table 5.

### (Blending)

| | |
|---|---|
| Polyvinyl chloride resin | 100 parts by weight |
| DOP | 50 parts by weight |
| Epoxylated soybean oil | 3 parts by weight |
| LAHS | 1.3 parts by weight |
| Zinc stearate | 0.4 parts by weight |
| Bisphenol A | 0.2 parts by weight |
| Initial coloring preventing agent | 0.1 part by weight |

Coloring property (degree of whiteness W. color difference ΔE, degree of yellowness ΔN) of the sheet was measured by using a color-difference meter, model 1001 DP, manufactured by Nippon Denshoku Co.

In Table 4, LAHS of Example No. 3-2 is the one of which the surface is treated with 1.5% of a silane coupling agent (A-1100 produced by Nippon Unika Co.) and LAHS of Example No. 3-3 is the one of which the surface is treated with 20% of erucic amide (Alfro P-10 produced by Nippon Yushi Co.).

### (Example 5)

The following blended composition was roll-kneaded at 150 °C for 6 minutes, and was pressed at 170 °C for 5 minutes to obtain a sheet having a thickness of 1 mm. A test piece was prepared from the above sheet and was heated in the Geer's oven maintained at 90 °C in order to measure the time until it is deteriorated (blackened). The test piece was further tested for its volume resistivity (VR) and thermal stability (HT) [using a Congo Red test paper] in compliance with JIS K-6723. The results were as shown in Table 6.

### (Blending)

| | |
|---|---|
| Polyvinyl chloride resin | 100 parts by weight |
| DOP | 50 parts by weight |
| Epoxylated soybean oil | 3 parts by weight |
| LAHS | 0.5 parts by weight |
| Calcium stearate | 0.5 parts by weight |
| Zinc stearate | 0.5 parts by weight |
| Bisphenol A | 0.2 parts by weight |
| Dibenzoylmethane | 0.1 part by weight |
| Polyhydric alcohol | 0.5 parts by weight |

According to the present invention, lithium carbonate and aluminum chloride are reacted together in the presence of sodium carbonate and sodium hydroxide, and a higher fatty acid or a surfactant is added to the reaction mixture, enabling the crystals of the resulting lithium aluminum complex hydroxide salt (LAHS) to grow very favorably, and the particle diameter and the particle size to become uniform.

According to the present invention, LAHS having the orientation degree of larger than 10 can be very favorably dispersed in the resins to enhance transparency of a resin composition in which it is blended. Especially, LAHS increases the heat stability of a chlorinated vinyl chloridse resin, and moreover, LAHS of the invention can be favorably used as an infrared ray-absorbing agent or as an AB agent for the resin films.

### (Example 6)

In this Example, a heat stabilizing effect of a resin stabilizer of sample No. 1 composed of a fine powder of a lithium aluminum complex hydroxide salt especially when it was added to a chlorinated vinyl chloride resin which was highly heat-resistant and used in a high temperature region will be describe.

To confirm the heat stabilizing effect of a chlorinated vinyl chloride resin by the resin stabilizer of the present invention, a hard sheet was prepared by the following methods of compounding and molding and evaluated.

### (Compounding)

| | |
|---|---|
| Chlorinated vinyl chloride resin | 100 parts by weight |
| Mercapto Sn-type stabilizer | 0.7 parts by weight |
| Ester-type wax | 1.0 part by weight |
| Sample | 1.0 part by weight |

### (Molding method)

The above components were compounded at a temperature of 160° C and kneaded for 7 minutes by a roll mill to form a uniform mixture having thickness of 0.4 mm. The mixture was heated at 180° C under a pressure of 150 Kg/cm² for 5 minutes to prepare a sheet of chlorinated vinyl chloride having a thickness of 1 mm.2

### (Testing Method)

Heat stabilization duration time

The sample sheet was suspended in a Geer's heat aging tester adjusted at 190° C, and taken out every 10 minutes, and its degree of coloration was visually evaluated. The time which was required until the sheet was decomposed to assume a dark brown color was measured. The test results are shown in Table 7. As comparative examples, an experiment having no sample of the present invention and sample sheets containing zeolite 4A, 5A, hydrotalcite and calcium stearate were evaluated and the results are sohwn in Table 7. These results show that when a stabilizer composed of a fine powder of liothium aluminum complex hydroxide salt of the present invention is added to a chlorinated vinyl chloride resin, it showed an outstanding effect as compared with other stabilizers. Especially, hydrotalcite and calcium stearate wichi give an excellent stabilizing effect to normal vinyl chloride impedes a stabilizing effect against chlorinated vinyl chloride.

**Table 1**

| Sample No. | Orientation degree | Average particle diameter (µm) | Apparent specific gravity (g/cm³) | Specific surface area (m²/g) | Dispersibility (number/mm²) | Transparency (T%) | Chlorine-trapping property (mm) |
|---|---|---|---|---|---|---|---|
| 1 | 47.1 | 3.9 | 0.119 | 22.4 | 1 | 85.0 | 82 |
| H-1 | 4.42 | 16.9 | 0.186 | 26.1 | 76 | 35.2 | 54 |
| H-2 | 6.37 | 0.5 | 0.176 | 27.1 | 17 | 77.7 | 23 |
| H-3 | 4.96 | 9.8 | 0.263 | 41.8 | 49 | 77.5 | 67 |
| H-4 | 7.29 | 5.3 | 0.155 | 34.5 | 5 | 83 | 73 |
| H-5 | 7.59 | 7.8 | 0.239 | 27.3 | 42 | 78.6 | 76 |

**Table 2**

| Sample No. | Yellowing test (N-value) | | Heat-aging test (N-value) | |
|---|---|---|---|---|
| | Extruded one time | Extruded three times | First | After 5 hours |
| 1 | 5.4 | 12.1 | 12.9 | 22.5 |
| H-2 | 7.3 | 15.4 | 15.4 | 30.4 |
| H-3 | 6.1 | 13.8 | 14.1 | 25.6 |
| H-5 | 5.8 | 13.1 | 13.6 | 24.8 |
| *1 H-6 | 7.6 | 16.6 | 17.1 | 36.5 |

| | | | | |
|---|---|---|---|---|
| *1: Synthetic hydrotalcite | | | | |

**Table 3**

| Sample No. | Orientation degree reinforcing agent | | | Orientation degree |
|---|---|---|---|---|
| | Kind of ion | Trade name | Composition | |
| 2-1 | nonion | RHEODOL MO-60 | oleophilic glycerin monooleate | 21.12 |
| 2-2 | nonion | RHEODOL AS-10 | glycerin monostearate | 15.11 |
| 2-3 | nonion | RHEODOL SUPER TW-L120 | polyoxyethylene (20) monolaurate sorbitan | 10.09 |
| 2-4 | anion | Emal 0 | Na lauryl sulfate | 13.41 |
| 2-5 | anion | Emal 20C | Na polyethylene lauryl ether sulfate | 13.88 |
| 2-6 | amphoteric ion | AMPHITOL 20N | lauryl dimethylamine oxide | 10.65 |
| 2-7 | amphoteric ion | AMPHITOL 20BS | betaine lauryl dimethylamino acetate | 11.98 |
| 2-8 | fatty acid | | oleic acid | 37.31 |
| 2-9 | fatty acid | | lauric acid | 10.23 |

**Table 4**

| Example No. | Blending agent (AB agent) | Blending amount (ppm) | Haze (%) | Blocking property | Fisheye | Scratch (%) |
|---|---|---|---|---|---|---|
| 3-1 | sample No.1 | 800 | 1.6 | excellent | none | 0.2 |
| 3-2 | sample No.1 | 600 | 1.4 | " | none | 0.1 |
| 3-3 | sample No.1 | 500 | 1.5 | " | none | 0.2 |
| 3-4 | sample No.2-8 | 800 | 1.8 | " | none | 0.4 |
| H-7 | sample No.H-4 | 800 | 3.1 | " | 3 | 0.4 |

**Table 5**

| Example No. | Initial adhesion preventing agent | H.T (min) | V.R (Ωcm) x10¹³ | Coloring property | | |
|---|---|---|---|---|---|---|
| | | | | W(Lab) | ΔE | ΔN |
| 4-1 | none | 138 | 0.80 | 85.6 | 12.1 | 16.5 |
| 4-2 | stearoylbenzoylmethane | 156 | 0.83 | 89.1 | 8.3 | 9.1 |
| 4-3 | dibenzoylmethane | 154 | 0.73 | 90.1 | 7.1 | 5.6 |
| 4-4 | dehydroacetic acid | 140 | 0.10 | 88.3 | 9.0 | 8.2 |
| 4-5 | 2-phenylindole | 166 | 0.98 | 86.6 | 10.9 | 13.2 |
| 4-6 | 1,4-butanediolbis | 185 | 0.94 | 88.6 | 8.8 | 10.1 |
| 4-7 | α-acetyl γ-butylolactone | 155 | 0.90 | 87.7 | 9.9 | 12.0 |

**Table 6**

| Example No. | Polyhydric alcohol | Blackening time (min) | H.T (min) | V.R (Ωcm) x10¹³ |
|---|---|---|---|---|
| 5-1 | none | 40 | 60 | 1.34 |
| 5-2 | pentaerythritol | 70 | 124 | 1.98 |
| 5-3 | dipentaerythritol | 90 | 142 | 1.59 |
| 5-4 | PLENLIZER | 80 | 137 | 1.82 |
| 5-5 | mannitol | 80 | 140 | 3.27 |
| 5-6 | xylitol | 80 | 120 | 2.02 |
| 5-7 | lactide | 90 | 145 | 2.26 |
| 5-8 | TOHTOLIZER | 80 | 123 | 2.32 |

**Table 7**

| | Example | Comp. Example | Comp. Example | Comp. Example | Comp. Example | Comp. Example |
|---|---|---|---|---|---|---|
| Samples | No. 1 | blank | zeolite 4A | zeolite 5A | hydrotalcite | calcium stearate |
| Heat stability duration time | | | | | | |
| 10 minutes | 1 | 1 | 1 | 1 | 1 | 1 |
| 20 minutes | 2 | 2 | 2 | 2 | 2 | 4 |
| 30 minutes | 2 | 2 | 3 | 2 | 5 | 5 |
| 40 minutes | 2 | 5 | 3 | 4 | | |
| 50 minutes | 2 | | 4 | 5 | | |
| 60 minutes | 4 | | 5 | | | |
| Evaluation standard of heat stability duration time 1: ivory, 2: slight brown, 3: faint brown, 4:brown, 5: dark brown | | | | | | |

## Claims

1. A lithium aluminum complex hydroxide salt represented by the general formula (1):
[Al₂Li(OH)₆]ₙX. mH₂O (1)
wherein X is an inorganic or organic anion, n is a valence number of anion, and m is a number of not more than 3.
and having an orientation degree (OD) defined by the formula (2):${\text{OD = I}}_{\text{(002)}} {\text{/I}}_{\text{(110)}}$
wherein I₍₀₀₂₎ is the relative intensity of a peak in the X-ray diffraction (Cu-Kα) with an index of the plane (002) appearing at a spacing (d) of 7.67 to 7.84 angstroms, and I₍₁₁₀₎ is the relative intensity of a peak in the X-ray diffraction (Cu-Kα) with an index of the plane (110) appearing at a spacing (d) of 4.41 to 4.45 angstroms.
of not smaller than 10.

2. A lithium aluminum complex hydroxide salt according to claim 1, wherein the orientation degree is not smaller than 20.

3. A lithium aluminum complex hydroxide salt according to claim 1 or claim 2, comprising hexagonal plate-like crystalline particles having a primary particle diameter of from 0.05 to 1 µm.

4. A lithium aluminum complex hydroxide salt according to any one of claims 1 to 3 having a bulk density of from 0.1 to 0.25 g/cm³ and a BET specific surface area of from 20 to 40 m²/g.

5. A lithium aluminum complex hydroxide salt according to any one of claims 1 to 4, wherein the anion (X) is a carbonic acid ion.

6. A lithium aluminum complex hydroxide salt according to any one of claims 1 to 5 containing a higher fatty acid or a surfactant as an orientation reinforcing agent in an amount of from 0.5 to 10% by weight with respect to the salt.

7. A process for preparing a lithium aluminum complex hydroxide salt, which comprises reacting lithium carbonate with aluminum chloride in water in the presence of sodium carbonate and sodium hydroxide, adding a higher fatty acid or a surfactant as an orientation reinforcing agent to obtain a reaction mixture and treating the reaction mixture at a temperature of from 60 to 100°C, so that the orientation degree (OD) thereof as defined in claim 1 becomes not smaller than 10.

8. A resin composition comprising a thermoplastic resin and a lithium aluminum complex hydroxide salt according to any one of claims 1 to 7 in an amount of from 0.1 to 10 parts by weight per 100 parts by weight of the thermoplastic resin.

9. A resin composition according to claim 8, wherein the thermoplastic resin is an olefin resin containing chlorine-containing catalyst residues.

10. A resin composition according to claim 8, wherein said thermoplastic resin is a chlorine-containing polymer

11. A resin composition according to claim 9 or claim 10, further comprising (a) a zinc salt of a higher fatty acid or a combination of a zinc salt of a higher fatty acid and an alkaline earth metal salt of a higher fatty acid in an amount of from 0.01 to 10 parts by weight, and (b) an organic colouring preventing agent in an amount of from 0.01 to 5 parts by weight.

12. A resin composition according to claim 11, further comprising a polyhydric alochol ester in an amount of from 0.01 to 10 parts by weight per 100 parts by weight of the chlorine-containing resin.

13. Use of a salt according to any one of claims 1 to 7 as a resin blending agent.

14. Use of a salt according to any one of claims 1 to 7 as an infrared ray-absorbing agent.

15. Use of a salt according to any one of claims 1 to 7 as an anti-blocking agent in thermoplastic resin films having a thickness of from 15 to 30 µm.

## Patentansprüche

1. Lithiumaluminiumhydroxid-Komplexsalz der allgemeinen Formel:
[Al₂Li(OH)₆]ₙX.mH₂O (1)
worin X ein anorganisches oder organisches Anion ist, n die Anionenvalenz und m eine Zahl von nicht größer als 3 ist,
mit einem Orientierungsgrad (OD), definiert durch die Formel (2):${\text{OD = I}}_{\text{(002)}} {\text{/I}}_{\text{(110)}}$
worin I₍₀₀₂₎ die relative Intensität eines Peaks im Röntgenbeugungsdiagramm (Cu-Kα) mit einem Flächenindex (002) bei einem Abstand (d) von 7,67 bis 7,84 Ångström ist, und I₍₁₁₀₎ die relative Intensität eines Peaks im Röntgenbeugungsdiagramm (Cu-Kα) mit einem Flächenindex (110) bei einem Abstand (d) von 4,41 bis 4,45 Ångström ist,
von nicht kleiner als 10.

2. Lithiumaluminiumnydroxid-Komplexsalz nach Anspruch 1, dadurch gekennzeichnet, daß der Orientierungsgrad nicht kleiner als 20 ist.

3. Lithiumaluminiumhydroxid-Komplexsalz nach Anspruch 1 oder Anspruch 2, dadurch gekennzeichnet, daß es hexagonale plattenförmige kristalline Teilchen mit einem primären Teilchendurchmesser von 0,05 bis 1 µm aufweist.

4. Lithiumaluminiumhydroxid-Komplexsalz nach einem der Ansprüche 1 bis 3, dadurch gekennzeichnet, daß es eine Schüttdichte von 0,1 bis 0,25 g/cm³ und eine spezifische Oberfläche nach BET von 20 bis 40 m²/g besitzt.

5. Lithiumaluminiumhydroxid-Komplexsalz nach einem der Ansprüche 1 bis 4, dadurch gekennzeichnet, daß das Anion (X) ein Kohlensäureion ist.

6. Lithiumaluminiumhydroxid-Komplexsalz nach einem der Ansprüche 1 bis 5, dadurch gekennzeichnet, daß es als orientierungsverstärkendes Mittel eine höhere Fettsäure oder ein oberflächenaktives Mittel in einer Menge von 0,5 bis 10 Gew.-%, bezogen auf das Salz, enthält.

7. Verfahren zur Herstellung eines Lithiumaluminiumhydroxid-Komplexsalzes, umfassend: Umsetzen von Lithiumcarbonat mit Aluminiumchlorid in Wasser in Gegenwart von Natriumcarbonat und Natriumhydroxid, Zugeben einer höheren Fettsäure oder eines oberflächenaktiven Mittels als orientierungsverstärkendes Mittel unter Erhalt einer Reaktionsmischung und Behandeln der Reaktionsmischung bei einer Temperatur von 60 bis 100 °C, damit der in Anspruch 1 definierte Orientierungsgrad (OD) nicht kleiner als 10 wird.

8. Harzzusammensetzung umfassend ein thermoplastisches Harz und ein Lithiumaluminiumhydroxid-Komplexsalz nach einem der Ansprüche 1 bis 7 in einer Menge von 0,1 bis 10 Gewichtsteilen pro 100 Gewichtsteile des thermoplastischen Harzes.

9. Harzzusammensetzung nach Anspruch 8, dadurch gekennzeichnet, daß das thermoplastische Harz ein Olefinharz ist, das Chlor-enthaltende Katalysatorrückstände enthält.

10. Harzzusammensetzung nach Anspruch 8, dadurch gekennzeichnet, daß das thermoplastische Harz ein Chlorenthaltendes Polymer ist.

11. Harzzusammensetzung nach Anspruch 9 oder Anspruch 10, dadurch gekennzeichnet, daß sie außerdem umfaßt (a) ein Zinksalz einer höheren Fettsäure oder einer Kombination eines Zinksalzs einer höheren Fettsäure und eines Erdalkalimetallsalzes einer höheren Fettsäure in einer Menge von 0,01 bis 10 Gewichtsteilen, und (b) ein organisches eine Färbung verhinderndes Mittel in einer Menge von 0,01 bis 5 Gewichtsteilen.

12. Harzzusammensetzung nach Anspruch 11, dadurch gekennzeichnet, daß sie außerdem einen Ester eines mehrwertigen Alkohols in einer Menge von 0,01 bis 10 Gewichtsteilen pro 100 Gewichtsteile des Chlorenthaltenden Harzes umfaßt.

13. Verwendung eines Salzes nach einem der Ansprüche 1 bis 7 als Zusatzmittel für Harze.

14. Verwendung eines Salzes nach einen der Ansprüche 1 bis 7 als Infrarotstrahlen-Absorptionsmittel.

15. Verwendung eines Salzes nach einem der Ansprüche 1 bis 7 als Antiblockiermittel in thermoplastischen Harzfolien mit einer Dicke von 15 bis 30 µm.

## Revendications

1. Sel complexe d'hydroxyde de lithium aluminium, représenté par la formule générale (1) :
[Al₂Li(OH)₆]ₙX.mH₂O (1)
dans laquelle X est un anion minéral ou organique, n est le nombre de valence de l'anion, et m est un nombre non supérieur à 3
et ayant un degré d'orientation (OD) défini par la formule (2) :${\text{OD = I}}_{\text{(002)}} {\text{/I}}_{\text{(110)}}$
dans laquelle I₍₀₀₂₎ est l'intensité relative d'un pic dans la diffraction des rayons X (Cu-Kα) avec un indice du plan (002) apparaissant à un espacement (d) de 7,67 à 7,84 Å, et I₍₁₁₀₎ est l'intensité relative d'un pic dans la diffraction des rayons X (Cu-Kα) avec un indice du plan (110) apparaissant à un espacement (d) de 4,41 à 4,45 Å,
non inférieur à 10.

2. Sel complexe d'hydroxyde de lithium aluminium selon la revendication 1, dans lequel le degré d'orientation n'est pas inférieur à 20.

3. Sel complexe d'hydroxyde de lithium aluminium selon la revendication 1 ou la revendication 2, comprenant des particules cristallines en forme de plaque hexagonale ayant un diamètre de particule primaire de 0,05 à 1 µm.

4. Sel complexe d'hydroxyde de lithium aluminium selon l'une quelconque des revendications 1 à 3, ayant une masse volumique apparente de 0,1 à 0,25 g/cm³ et une surface spécifique BET de 20 à 40 m²/g.

5. Sel complexe d'hydroxyde de lithium aluminium selon l'une quelconque des revendications 1 à 4, dans lequel l'anion (X) est un ion d'acide carbonique.

6. Sel complexe d'hydroxyde de lithium aluminium selon l'une quelconque des revendications 1 à 5, contenant un acide gras supérieur ou un agent tensioactif en tant qu'agent renforçant l'orientation, en une proportion de 0,5 à 10 % en poids par rapport au sel.

7. Procedé pour préparer un sel complexe d'hydroxyde de lithium aluminium, qui comprend la réaction du carbonate de lithium avec du chlorure d'aluminium dans de l'eau en présence du carbonate de sodium et d'hydroxyde de sodium, l'addition d'un acide gras supérieur ou d'un agent tensioactif en tant qu'agent renforçant l'orientation pour obtenir un mélange réactionnel et le traitement du mélange réactionnel à une température de 60 à 100 °C de sorte que le degré d'orientation (OD) de celui-ci, tel que défini dans la revendication 1, ne soit pas inférieur à 10.

8. Composition de résine comprenant une résine thermoplastique et un sel complexe d'hydroxyde de lithium aluminium selon l'une quelconque des revendications 1 à 7 en une proportion de 0,1 à 10 parties en poids pour 100 parties en poids de la résine thermoplastique.

9. Composition de résine selon la revendication 8, dans laquelle la résine thermoplastique est une résine d'oléfine contenant des résidus de catalyseur contenant du chlore.

10. Composition de résine selon la revendication 8, dans laquelle ladite résine thermoplastique est un polymère chloré.

11. Composition de résine selon la revendication 9 ou la revendication 10, comprenant en outre (a) un sel de zinc d'un acide gras supérieur, ou une combinaison d'un sel de zinc d'un acide gras supérieur et d'un sel de métal alcalino-terreux d'un acide gras supérieur, en une proportion de 0,01 à 10 parties en poids, et (b) un agent organique prévenant la coloration, en une proportion de 0,01 à 5 parties en poids.

12. Composition de résine selon la revendication 11, comprenant en outre un ester de polyalcool en une proportion de 0,01 à 10 parties en poids pour 100 parties en poids de la résine chlorée.

13. Utilisation d'un sel selon l'une quelconque des revendications 1 à 7 en tant qu'agent de mélange pour résine.

14. Utilisation d'un sel selon l'une quelconque des revendications 1 à 7 en tant qu'agent absorbant les rayons infrarouges.

15. Utilisation d'un sel selon l'une quelconque des revendications 1 à 7 en tant qu'agent anti-blocage dans des films de résine thermoplastique ayant une épaisseur de 15 à 30 µm.
